# EUROPEAN PATENT APPLICATION

(11) **EP 2 460 808 A1**
(43) Date of publication of application: **06.06.2012**
(21) Application number: 11190979.2
(22) Date of filing: 28.11.2011
(51) Int. Cl.: C07F 9/32

(54) **Process for the preparation of fosinopril and intermediates thereof**

(30) Priority: 06.12.2010 IT MI20102249
(71) Applicant: Dipharma Francis S.r.l., 20021 Baranzate (MI) (IT)
(72) Inventor: Allegrini, Pietro, 20021 Baranzate (MI) (IT); Attolino, Emanuele, 20021 Baranzate (MI) (IT); De Marco, Alessandro, 20021 Baranzate (MILANO) (IT); Gorassini, Fausto, 20021 Baranzate (MI) (IT); Michieletti, Mario, 20021 BaranzateE (MI) (IT)
(74) Representative: Minoja, Fabrizio

(57) **Abstract**

The present invention relates to a process for the preparation of intermediates useful in the synthesis of [1[S(R)],2α,4β]-4-cyclohexyl-1-[[[2-methyl-1-oxypropoxy) propoxy](4-phenylbutyl phosphinyl]acetyl]-L-proline, and the synthesis thereof, in particular as sodium salt (fosinopril sodium).

## Description

### FIELD OF INVENTION

The present invention relates to a process for the enzymatic preparation of intermediates useful in the synthesis of [1[S(R)],2α,4β]-4-cyclohexyl-1-[[[2-methyl-1-oxypropoxy) propoxy](4-phenylbutyl phosphinyl]acetyl]-L-proline, and the synthesis thereof, in particular as sodium salt (fosinopril sodium).

### PRIOR ART

Fosinopril sodium, namely [1[S(R)],2α,4β]-4-cyclohexyl-1-[[[2-methyl-1-oxypropoxy)propoxy](4-phenylbutyl phosphinyl]acetyl]-L-proline, sodium salt (compound of formula (I), wherein M=Na), is a known compound with antihypertensive activity.

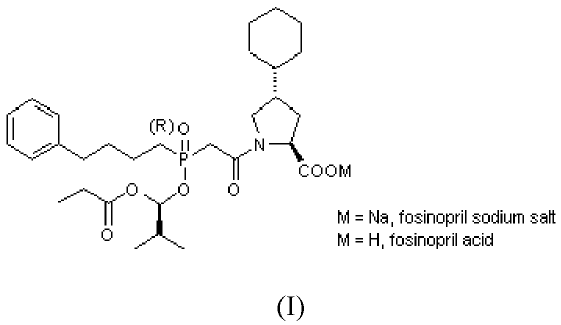

US 4,337,201 discloses its synthesis by condensation between the optically active [[2-methyl-1-oxypropoxy)propoxy](4-phenylbutyl phosphinyl]acetic acid of formula (II) and trans 4-cyclohexyl-L-proline of formula (III), with the use of a condensing agent or by activating the acid of formula (II), as shown in Scheme 1

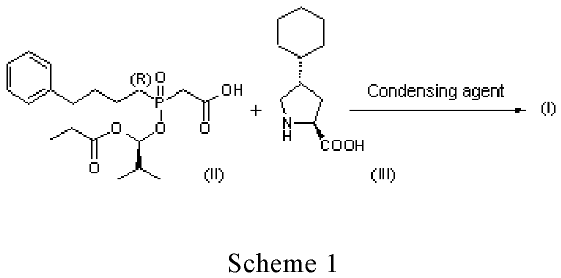

The synthesis of optically pure proline derivatives is relatively simple, as reported, for example, in US 4,912,231 and US 4,937,355. However, the synthesis of the optically active phosphine derivative of formula (II), as disclosed in US 4,873,356 and US 5,008,399, is far more complex. In fact, it is prepared according to Scheme 2 below.

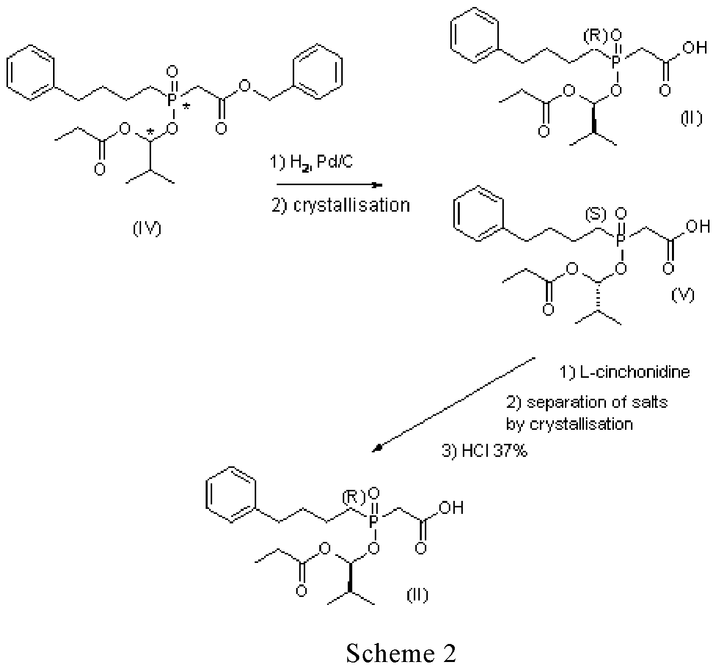

Briefly, the synthesis involves the preparation of the ester derivative of formula (IV), as a mixture of four diastereoisomers (the asterisk indicates the stereogenic centres), followed by removal of the protective benzyl group and subsequent crystallisation to isolate two of the four diastereoisomers as a racemic mixture of the compounds of formulas (II) and (V). The racemate is then resolved by formation of diastereomeric salts by reaction with a resolving agent, such as L-cinchonidine. The salt of the acid of formula (II) with cinchonidine is then treated with a strong acid to obtain the isomer of formula (II), as free acid. Five consecutive crystallisations of the cinchonidine salt are performed to obtain derivative (II) with high enantiomeric purity.

However, although this method has been applied on an industrial scale, it is very expensive, laborious and inefficient, even if the cinchonidine is recycled.

US 2010/0297711 reports a process of enantioselective enzymatic hydrolysis of a racemic mixture of compounds of formula (II) and (V), or a salt thereof, in the presence of an enzyme, for example belonging to the hydrolase class, and in particular to the lipase, protease and esterase sub-classes.

Specifically, the preparation of the enantiomer of formula (II), which is useful as intermediate in the preparation of fosinopril from a racemic mixture of compounds of formula (II) and (V), which corresponds to selective hydrolysis of the compound of formula (V), can be performed with a protease obtained from bacteria of the genus *Bacillus licheniformis,* such as one of the proteases designated as Proleather^{®} supplied by Amano or one of the Alcalases^{®} supplied by Clea or Novozym.

The use of enzymatic preparations in solution, for example as disclosed in US 2010/0297711, is an effective, economical method for the enzymatic resolution of the racemic mixture of the compounds of formula (II) and (V); however, such use can cause difficulties in processing the end-of-reaction mixture, because of precipitation of part of the constituents of said enzymatic solution. It is known that liquid enzymatic preparations must be formulated with buffers, surfactants, sugars and various other additives to preserve the stability and activity of the enzyme over time.

By repeating the experiments disclosed in US 2010/0297711, it was observed that, for example by using one of the Alcalases^{®} supplied by Clea, although the reaction proceeds with high enantioselectivity, at the work-up stage the precipitation of the constituents of the enzymatic solution in the form of mucilage or gel makes it particularly difficult to separate the so obtained enantiomerically pure compound of formula (II) from the rest of the mixture, thus requiring long filtration times.

This aspect constitutes a technical problem during use of the enzymatic method for resolution of the racemic mixture of compounds of formula (II) and formula (V) on an industrial scale. Moreover, the enzymatic preparation in liquid form is unsuitable for recycling of the biocatalyst, because it is perfectly soluble in the aqueous reaction mixture. This problem constitutes a further drawback in the industrial exploitation of the enzymatic method for resolution of the racemic mixture of compounds of formula (II) and formula (V).

There are various insoluble enzymatic formulations on the market which allow recovery and recycling of the enzyme, for example those in which the enzymes are immobilised. The various formulations which involve immobilisation of the enzymes include: 1) those in which the enzyme is covalently bonded to an inert medium, typically silica or polymer resins, which can constitute up to 90-99% of the total mass of the enzymatic formulation used; 2) those involving encapsulation of the enzyme in organic and/or inorganic gels; and 3) those in which the enzyme proteins are cross-linked.

In particular, cross-linked proteins include Cross-Linked Enzyme Crystals (CLECs), which are crystallised coprecipitated proteins of very high purity, and Cross-Linked Enzyme Aggregates (CLEAs). The latter are proteins precipitated from a solution by adding a salt or an anti-solvent, which consequently remain insoluble in the reaction medium, but with an "immobilised" tertiary structure identical to the one active in solution.

The major problem connected with the use of immobilised enzymes on an inert or cross-linked matrix is that these enzymatic formulations unfortunately always possess far lower activity than the enzyme in solution, the active units being equal. This is due to the low conformational mobility of the protein in solid phase, and the lower availability in relation to the substrate to be processed, which is present in solution.

An enzymatic system is therefore needed which supplies the phosphine derivative of formula (II), or a salt thereof, with high enantiomeric purity, without contaminants and, above all, with the use of methods which are cheaper and more suitable for its preparation on an industrial scale.

### SUMMARY OF THE INVENTION

A process has now been found which allows the phosphine compound of formula (II), or a salt thereof, to be obtained as sole enantiomer, by enantioselective enzymatic catalytic hydrolysis of the ester function of the single isomer of formula (V) of the racemic mixture of compounds of formula (II) and (V). The process according to the invention is unexpectedly advantageous on an industrial scale compared with known methods due to the use of a solid-phase enzyme, which allows cheaper and more efficient preparation of fosinopril or a salt thereof, particularly due to the possibility of recycling the enzyme.

### BRIEF DESCRIPTION OF ANALYSIS METHODS

The mixture of enantiomers of [[2-methyl-1-oxypropoxy) propoxy](4-phenylbutyl)-phosphinyl] acetic acid of formula (II + V) was analysed by HPLC, for example using a CHIRALCEL OD-H^{®} column (24 x 0.46 cm). The analysis was conducted by injecting a 10 µl sample of solution obtained by dissolving 10 mg of mixture in 10 mL of isopropanol (iPrOH) containing 0.05% trifluoroacetic acid (TFA), with a constant flow of 0.3 mL/min of petroleum ether (ETP)/iPrOH = 7/3. The retention time of the distomer of formula (V) was approx. 16 minutes, while the retention time of the eutomer of formula (II) was about 14 minutes. The iPrOH used for the eluent mixture also contains 0.05% TFA.

The tests of hydrolytic enzymatic activity were conducted by dissolving 5 mg of racemic mixture of compounds of formula (II + V) in 1 mL of 0.05 M phosphate buffer at pH 7.50 at about 50°C, and restoring the solution to ambient temperature. 5 to 50 mg of protease enzyme (depending on whether the enzyme was pure or crude) was added to the solution, which was left to stand overnight. The solution was tested by HPLC, according to the method described above, on a sample of about 20 µL taken from the reaction solution. Said sample was dried under nitrogen flow and taken up in 100 µL of iPrOH (to which 0.05% TFA was added). About 10 µL of the solution thus obtained was analysed by HPLC.

### DETAILED DESCRIPTION OF THE INVENTION

The subject of the invention is therefore a process for isolating a compound of formula (II), as a single enantiomer, or a salt thereof, 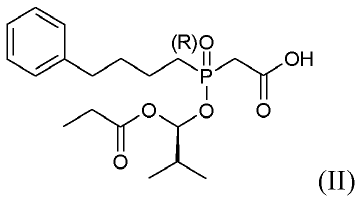 from a racemic mixture of compounds of formulas (II) and (V), or a salt thereof, comprising enantioselective enzymatic hydrolysis of the single isomer of formula (V) of said mixture 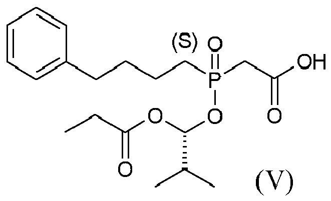 in the presence of an enzyme in the form of CLEA (Cross-Linked Enzyme Aggregates), in a solvent mixture.

The racemic mixture of compounds of formulas (II) and (V) can be prepared, for example, as described in US 4,873,356.

The enzyme is preferably a protease, and in particular one of the Alcalases^{®} supplied by Clea or Novozyme. An Alcalase^{®} in the form of CLEA (Cross-Linked Enzyme Aggregates) can be prepared from one of the Alcalases® in solution present on the market, such as those reported in US 2010/0297711, and is in any event marketed by Clea Technologies.

A particularly preferred protease in the form of Cross-Linked Enzyme Aggregates is CLEA-ST 201^{®}, marketed by Clea Technologies. This can be obtained by subjecting a protease in solution, originating from bacteria of the genus *Bacillus licheniformis,* to the controlled precipitation used to prepare CLEAs.

For example, a solvent mixture is formed by a solution comprising an aqueous buffer at a pH of between about 5.0 and 9.0, more preferably around a pH of about 7.5, and possibly an organic co-solvent, miscible or immiscible with the buffer.

A solution of an aqueous buffer may, for example, be a known phosphate buffer, ammonium bicarbonate, ethanolamine/HCl, borate; the reaction is preferably conducted in phosphate buffer.

An organic co-solvent may be, for example, an aprotic polar solvent such as dimethylformamide, dimethyl acetamide, acetonitrile or dimethyl sulphoxide; a ketone, such as acetone or methyl isobutyl ketone; an ether, such as tetrahydrofuran or dioxane; or an aprotic apolar solvent such as toluene, preferably an aprotic polar solvent.

The concentration of the racemate substrate, namely the racemic mixture of a compound of formula (II + V) in the solvent mixture, comprising a solution of a buffer and optionally an organic co-solvent, can be between about 5% and 50%, preferably between about 5% and 20%, and more preferably around 10%.

The reaction can be conducted at a temperature of between 15 and 60°C, preferably between about 20 and 40°C, and more preferably at about 25°C.

The reaction times depend on the reaction temperature and the type of CLEA used. Typically, the enzyme is left to react until about 50% conversion of the starting racemate is observed by HPLC, or until the concentration of the compound of formula (V), expressed in A% on HPLC, is below 1%. If the reaction is conducted in the presence of an automatic titrator (pH-stat), the endpoint of the reaction can be set, for example, at pH 7.5, and the reaction mixture left under stirring until the titrator no longer corrects the pH of the mixture. According to the preferred operating conditions indicated above, enzymatic hydrolysis is normally complete in about 2 days.

The pure enantiomer of formula (II) can be isolated from the heterogeneous end-of-reaction mixture by filtering the enzyme catalyst, acidifying the filtered solution to a pH of about 4 by adding hydrochloric acid, and extracting with a solvent such as toluene. By concentrating the organic solution, the enantiomer of formula (II) is obtained as a colourless oil, with excellent yields, typically comprised between about 40% and about 50% starting from the racemate of formula (II + V), and a chemical purity, evaluated by HPLC, equal to or greater than 98%.

The enantiomeric purity of the enantiomers of formula (II) isolated, calculated by chiral HPLC, expressed in terms of enantiomeric ratio, is equal to or greater than 99:1.

The enantiomer of formula (II) can be converted to its salt by reaction with an organic or inorganic base, preferably a tertiary amine, in a solvent, according to known methods.

The enantiomer of formula (II) thus obtained can be used directly to prepare fosinopril.

According to a further aspect thereof, the invention provides a process for the preparation of [1[S(R)],2α,4β]-4-cyclohexyl-1-[[[2-methyl-1-oxypropoxy) propoxy](4-phenylbutyl phosphinyl]acetyl]-L-proline (fosinopril), or a pharmaceutically acceptable salt thereof, in particular the sodium salt, comprising the reaction of the enantiomer of formula (II), thus obtained, with trans 4-cyclohexyl-L-proline and, optionally, its conversion to a pharmaceutically acceptable salt thereof.

The reactions can be conducted, for example, as reported in US 4,337,201.

Test reactions were conducted to further investigate the behaviour of the protease enzyme in the form of Cross-Linked Enzyme Aggregates (CLEA). Said reactions were conducted by performing two enzymatic hydrolysis reactions on a 10 g scale, from the same batch of racemic mixture (II + V), prepared as reported in US 4,873,356. Enzyme protease originating from *Bacillus licheniformis* in solution, marketed by Clea, CLEA FE-201^{®}, was used in one of said reactions, while CLEA-ST 201^{®}, namely the same *Bacillus licheniformis* enzyme but in the form of Cross-Linked Enzyme Aggregates, was used in the other. Amounts of enzymatic formulation such as to introduce an identical amount of active enzymatic units into the reaction mixture were used in the two tests. The hydrolysis reactions were conducted with the same solvent mixture, concentration and temperature.

Surprisingly, and unexpectedly, it was observed that the hydrolysis kinetics obtained with the solid cross-linked enzyme were identical to those obtained with the conventional liquid enzymatic formulation.

The reactions were completed in the same reaction time of 48 hours, and both led to suspensions.

At the end of the reaction, the reaction obtained with the enzyme in solution was acidified by adding 30% HCl to give a pH of about 3.4. Further formation of a thick gel was observed, which made the extraction of the compound of formula (II) in toluene very complex. Even when the end-of reaction mixture obtained with the enzyme in solution was filtered before acidifying, a gel which made the purification of the compound of formula (II) difficult was unfortunately obtained.

The reaction obtained with the solid cross-linked enzyme was filtered, and the filtered solution was acidified by adding 30% HCl to give a pH of about 3.4. The solution remained unexpectedly clear, and the compound of formula (II) was extracted in toluene without difficulty.

A further advantage resulting from the use of protease in the form of CLEA (Cross-Linked Enzyme Aggregates) is that the solid enzyme recovered by filtration was reused without further purifications or treatments twelve more times, without exhibiting any reduction in activity. Only on the tenth recycling did the enzyme prove less efficient, and the hydrolysis reaction concluded after the specified 48 hours.

Moreover, as stated above, the enantiomeric purity of the enantiomers of formula (II) isolated, calculated by chiral HPLC, expressed in terms of enantiomeric ratio, is equal to or greater than 99:1

A further purpose of the present invention is consequently a method for the preparation of a compound of formula (II), as described above, wherein the enzyme in CLEA form is recovered and, optionally, reused several times, in particular up to twelve times.

As the enzymatic material is always in suspension in the reaction mixture, it proved extremely easy to filter and recover at the end of the reaction in all twelve recycling tests, easily overcoming the problem of gel formation, described above, which was due to the constituents and additives present in the liquid enzymatic formulation.

A further subject of the present invention is a process for isolating the single isomer of formula (II), comprising selective enzymatic hydrolysis, in the presence of an enzyme, specifically a protease in CLEA form, of the isomers of formulas (V) and (VII) in a mixture of the four diastereoisomers of formulas (II), (V), (VII) and (VIII) 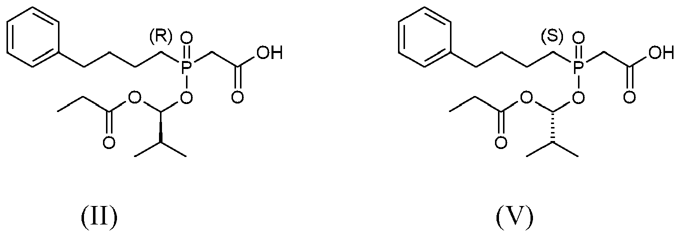 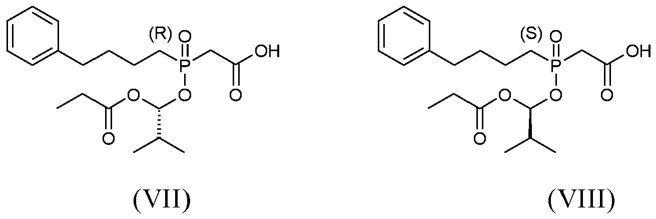 obtained by debenzylation of the compound of formula (IV), 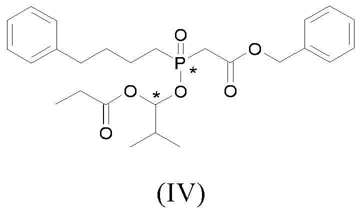 and subsequent separation of the isomer of formula (II) from its diastereoisomer (VIII) by known techniques, such as chromatographic techniques.

Selective hydrolysis of the mixture of the four diastereoisomers, in the presence of a protease in CLEA form, can be performed in accordance with the method reported above for obtaining a compound of formula (II) from a racemic mixture of the compounds of formulas (II) and (V). The enantiomer of formula (II) thus obtained can be used directly to prepare fosinopril or a salt thereof, for example as reported above.

The chemical purity of the compound of formula (II) thus obtained, evaluated by HPLC, is equal to or greater than 98%. Its enantiomeric purity calculated by chiral HPLC, expressed in terms of enantiomeric ratio, is equal to or greater than 99:1.

The following examples illustrate the invention.

### Example 1: Isolation of the compound of formula (II)

NaH₂PO₄ monohydrate (9.15 g, 34 mmol) is dissolved in 112 mL of water in a 500 mL reactor, and the pH is corrected with a 50% NaOH solution to a value of between 7.6 and 7.9. The solution is diluted with a further 38 mL of water. The racemic mixture of the compounds of formula (II+V) (15 g, 39 mmol) is then dissolved in the phosphate buffer solution, and the pH is corrected again with 50% NaOH to a value of between 7.6 and 7.8. The mixture is kept under stirring at 25°C until a solution is obtained; 12 g of an enzyme preparation in the form of a CLEA ST-201^{®} aggregate (amounting to about 5160 units), containing the enzyme Alcalase^{®} (a protease obtained from *Bacillus licheniformis*), is then added.

The solution is stirred slowly at a temperature of between 20 and 25°C for 48 hours, correcting the pH occasionally with 50% NaOH to maintain it within values of between 7.6 and 7.9.

At the end of the reaction, defined by HPLC as the time when the concentration of the compound of formula (V), expressed in A%, is lower than 1%, the enzyme is filtered out, washed with phosphate buffer and maintained at a temperature of under 8°C for subsequent reuse.

The reaction mixture is then acidified by adding 30% HCl to give a pH of between 4.5 and 5.0, and compound (II) is extracted with toluene.

The organic phase is washed with water and concentrated under vacuum to give 7.7 g of compound of formula (II) as a colourless oil which solidifies in time, having an HPLC purity exceeding 98.5% and an enantiomeric purity greater than 99:1.

¹H NMR (300 MHz, CDCl₃), ppm: 10.48 (bs, 1H), 7.28-7.12 (m, 5H), 6.30 (dd, 1H, J 7.8 and 4.2 Hz), 3.10 (dd, 1H, J_{gem} 14.5 and J 31.8 Hz), 3.04 (dd, 1H, J_{gem} 14.5 and J 33.5 Hz), 2.64-2.59 (m, 2H), 2.43-2.30 (m, 2H), 2.00 (m, 3H), 1.70 (m, 4H), 1.13 (t, 3H, J 7.5 Hz), 0.94 (d, 3H, J 2.7 Hz), 0.92 (d, 3H, J 2.4 Hz).

### Example 2: Synthesis of fosinopril acid, compound (I) M=H

The pure enantiomer of the compound of formula (II) (2.3 g, 6.0 mmol) is dissolved in dichloromethane (60 ml) and treated with anhydrous hydroxybenzotriazole (1.0 g, 6.6 mmol). The solution is cooled to -18°C and treated with dicyclohexylcarbodiimide (1.36 g, 6.6 mmol). The reaction mixture is kept under stirring for about 4h and slowly restored to ambient temperature. The solution is then cooled again to about -18°C and treated with trans-4-cyclohexyl-L-proline hydrochloride (1.54g, 6.6 mmol) and N,N-diisopropylethylamine (1.7 g, 13.2 mmol). The mixture is restored to ambient temperature and left under stirring for 1 day. The end-of-reaction mixture is concentrated at low pressure, diluted with ethyl ether and treated with water. After filtration the biphasic mixture is acidified with HCl to a pH of between about 1 and 2, and the phases are separated. The aqueous phase is re-extracted with ethyl acetate and the combined organic phases are washed with water and brine and anhydrified on Na₂SO₄. After filtration and evaporation of the solvents at low pressure, about 4 g of crude fosinopril acid are obtained.

### Example 3: Isolation of the compound of formula (II) from recycled enzyme

Following the procedure of Example 1, 12 g of enzyme preparation in the form of a CLEA-ST 201^{®} aggregate were re-used 10 times without further addition of enzyme. 0.6 g of CLEA-ST 201^{®} (equivalent to about a 260 units) were added at the 11th recycle.

The obtained results are reported in the following table.

| **Recycle N°** | **A% (V) 48h** | **Yield %** | **HPLC purity** |
|---|---|---|---|
| **1** | 0.9 | 47.0 | 98.3 |
| **2** | 0.2 | 44.1 | 98.6 |
| **3** | 0.3 | 44.3 | 98.9 |
| **4** | 0.6 | 45.4 | 98.2 |
| **5** | 0.5 | 45.5 | 98.6 |
| **6** | 0.5 | 45.5 | 98.6 |
| **7** | 0.7 | 43.9 | 98.1 |
| **8** | 0.7 | 45.3 | 98.5 |
| **9** | 0.7 | 46.4 | 99.4 |
| **10** | 2.2 | 45.6 | 99.4 |
| **11** | 1.1 | 46.3 | 99.4 |
| **12** | 1.1 | 45.5 | 99.5 |

## Claims

1. A process for isolating a compound of formula (II), as a single enantiomer, or a salt thereof; 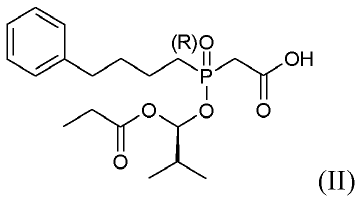 from a racemic mixture of compounds of formulas (II) and (V), or a salt thereof, comprising enantioselective enzymatic hydrolysis of the single isomer of formula (V) of said mixture. 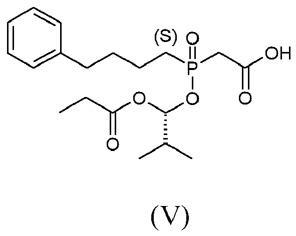 in the presence of a enzyme in the form of CLEA (Cross-Linked Enzyme Aggregates), in a solvent mixture.

2. A process as claimed in claim 1, wherein the enzyme is a protease.

3. A process as claimed in claim 1, wherein the solvent mixture comprises a solution of an aqueous buffer at a pH of between about 5.0 and 9.0; and optionally an organic co-solvent.

4. A process as claimed in claim 3, wherein the aqueous buffer is selected from a phosphate buffer, ammonium bicarbonate, ethanolamine/HCl and borate.

5. A process according to claim 4 wherein the aqueous buffer is a phosphate buffer.

6. A process as claimed in claim 3, wherein an organic co-solvent is selected from the group comprising an aprotic polar solvent, a ketone and an ether; preferably an aprotic polar solvent.

7. A process as claimed in claim 1 or 3, wherein the concentration of the racemic mixture in the solvent mixture is between about 5% and 50%.

8. A process as claimed in each of claims 1 to 7, where the enzyme is recovered and, optionally, reused.

9. A compound of formula (II), as obtainable in accordance with the process described in each of claims 1 to 7, having a chiral HPLC enantiomeric purity equal to or greater than 96:4.

10. A process as claimed in claim 1, further comprising the reaction of the enantiomer of formula (II), thus obtained, with trans 4-cyclohexyl-L-proline to obtain [1[S(R)],2α,4β]-4-ciclohexyl-1-[[[2-methyl-1-oxypropoxy)propoxy] (4-phenylbutylphosphinyl]acetyl]-L-proline and, optionally, its conversion to a pharmaceutically acceptable salt thereof.

11. Process for isolating the single isomer of formula (II), 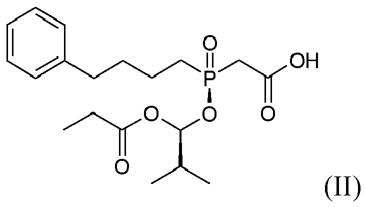 comprising selective enzymatic hydrolysis of the mixture of the four diastereoisomers of formula (II), (V), (VII) and (VIII) in the presence of an enzyme, in CLEA (Cross-Linked Enzyme Aggregate) form 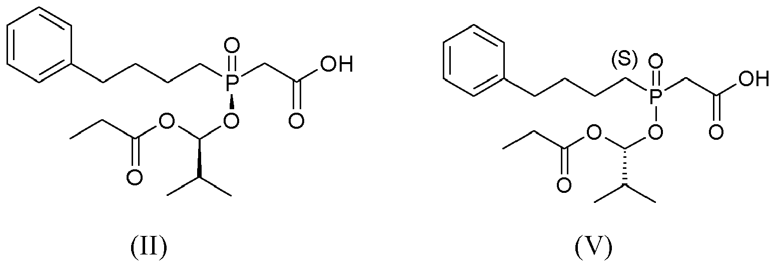 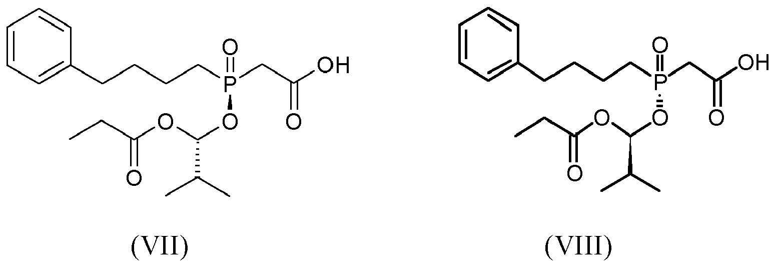 and subsequent separation of the isomer of formula (II) from its diastereoisomer of formula (VIII).

12. A process for preparing Fosinopril or a salt thereof having a chemical purity evaluated by HPLC equal to or greater than 98% comprising using a compound of formula (II) 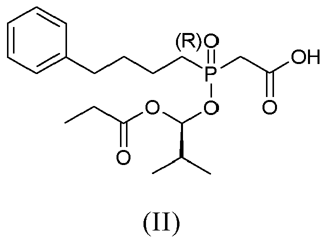 as intermediate material.

13. A process for preparing Fosinopril or a salt thereof having an enantiomeric purity calculated by chiral HPLC, expressed in terms of enantiomeric ratio, equal to or greater than 99:1, comprising using a compound of formula (II) 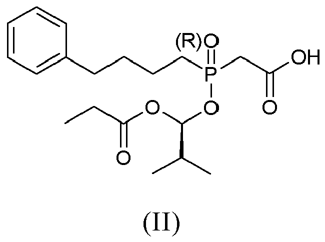 as intermediate material.
